# EUROPEAN PATENT SPECIFICATION

(11) **EP 1 106 672 B1**
(45) Date of publication and mention of the grant of the patent: **24.03.2004**
(21) Application number: 00122134.0
(22) Date of filing: 12.10.2000
(51) Int. Cl.: C10B 49/20, C10B 57/18, C10B 19/00, C10B 53/00, B01J 8/08, B01J 19/12, B09B 3/00

(54) **Process and equipment for the transformation of refuse using induced currents**
Verfahren und Vorrichtung zur Zersetzung von Abfallstoffen mittels induzierten Stroms
Procédé et appareillage pour la transformation de déchets en utilisant des courants induits

(30) Priority: 07.12.1999 IT TO991078
(43) Date of publication of application: 13.06.2001
(73) Proprietor: Donizetti Srl, 10100 Torino (IT)
(72) Inventor: Morgantini, Gianpiero, 10100 Torino (IT); Pellegrin, Ruggero, 10100 Torino (IT)
(74) Representative: Marchitelli, Mauro

(56) References cited:
- DE-A- 2 328 545
- GB-A- 237 940
- US-A- 5 423 891

## Description

The present invention concerns the disposal of solid refuse and, in particular, refuse and waste containing organic substances and polymers, as well as the fibres of silicates such as glass and asbestos.

More precisely, the invention concerns a procedure and relative equipment suitable for transforming solid refuse into gaseous or liquid combustibles, or into paraffin or olefinic waxes, via a process of pyrolysis. As is known, a pyrolysis procedure involves heating organic products with high molecular weights, with the possible addition of water, without contact with air. At temperatures above 800°C the pyrolysis reaction produces combustible gases such as carbon oxide, methane and hydrogen.

The continuous pyrolysis equipment in use today is essentially composed of a rotating drum into which the materials to be processed are fed, with heating applied externally, through the drum walls. This system of heat transmission involves lengthy material heating times, with the consequent production of large amounts of undesired substances and a low energy yield. Due to the manner in which the heating occurs, temperatures greater than approximately 700°C, a temperature that is insufficient to vaporise the carbon that is formed, cannot be applied to the materials in these systems. In plants of this type, the eventual addition of steam only results in a further reduction of the temperature and the energy yield. In fact, one of the great difficulties in transferring heat to the mass of products to be processed is that when the walls are heated, blocks of molten plastic adhere to them and impede the transfer of heat to the inside of the processing reactor, plastic materials being optimal thermal insulators. Direct-fired heating systems are also well known, but there is little possibility of controlling the process temperature.

Systems for the depolymerization of synthetic polymers, essentially composed of devices with external heating provided via electric resistances or other heating systems, are also known. In this case as well, due to localised overheating and the absence of steam in the system, carbon-based residues are formed which degrade the quality of the final products.

Systems for the vitrification of silicate fibres, such as glass or asbestos, also exist. These contemplate the use of rotating drums with internal heating via direct-fire or electric arc systems.

Other prior art documents concerning the pyrolysis of refuse and waste are DE-A-2 328 545 and US-A-5 423 891.

The patent application DE-A-2 328 545 discloses a process for the pyrolysis of refuse, like sewage sludge or plastic, in an air- or oxidant-free environment comprising the introduction of at least a part of pyrolysis heat by means of electrically conductive material mixed with the refuse to be treated and which is heated by induced electrical currents.

US-A-5 423 891 relates as well to a method for direct gasification of solid waste by heating solid waste materials continuously in the absence of air to high temperature to directly produce a high BTU gas.

Another process concerning the generation of gas from coal and coke and aimed to increasing the yield in the manufacture of coal gas, wherein the heating is performed in presence of steam, is disclosed in GB-A-237 940.

The present invention sets itself the goal of providing a procedure and the equipment for the transformation of refuse and waste that enable the problems of the known solutions to be surmounted and permit the best possible recovery of useful substances to be achieved from the transformation process.

According to the present invention, this objective is achieved using equipment and a procedure possessing the characteristics forming the subject of the claims.

According to the present invention, the material to be treated is mixed with electrically conductive bodies, typically metal spheres, and the mixture transferred, avoiding any contact with air, into a reactor where a powerful flux of variable electromagnetic induction of elevated frequency is created. The electromagnetic induction flux induces electrical currents in the conductive bodies that are capable of heating the conductive bodies and the material to be processed to an opportunely programmed temperature in a range between 300 and 1500°C, thereby producing a transformation of the material. The present invention also provides for the separation of the products of the reaction from the conductive bodies, which are then reutilised in a continuous cycle.

The process and equipment described in the present invention are applicable to the processing of various types of refuse, including polyethylene and polypropylene, printed circuit board scrap, paper, wood, biomass, sanitary refuse, medicines, rubber, paints, oils, grease, resins and similar materials, even in the presence of fibreglass and asbestos. Application examples of the process and equipment described in the present invention are as follows:
- depolymerization of polythene and polypropylene waste with the production of waxes and plasticizers,
- elimination of printed circuit board scrap containing resins and fibreglass, with the production of gaseous combustibles, recyclable metals and vitreous slag,
- processing of metallic packaging contaminated with sludge and dregs, with the production of clean, reusable metal scrap,
- gasification of carbon-based refuse in general, with the production of gaseous combustibles,
- processing of refuse containing fibreglass and asbestos, with the production of a non-hazardous vitreous material.

The process and equipment described in the present invention permit rapid heating of the material to be processed, and this heating takes place directly inside the refuse mass. With the addition of steam, this rapid heating allows the gasification of carbon-based substances as water gas, with the formation of negligible quantities of carbon resins'and, therefore, with a high energy yield. In addition, the presence of steam also provides an intrinsic safety effect as it impedes the formation of explosive mixtures.

Additional characteristics and advantages of the present invention will become evident during the detailed description that follows, which is supplied purely as a non limitative example, and refers to the following enclosed drawings:
- figure 1 is a partially sectioned schematic view of equipment based on the present invention,
- figure 2 is a larger-scale schematic section of the part indicated by arrow II in figure 1,
- figures 3a, 3b, 3c, 3d, 3e and 3f are schematic plan views of different operative configurations indicated by arrow III in figure 1,
- figures 4a, 4b, 4c, 4d, 4e and 4f are sections along the IV-IV lines of the corresponding figures 3a, 3b, 3c, 3d, 3e and 3f,
- figures 5, 6 and 7 are the respective sections along the lines V-V, VI-VI and VII-VII in figure 2,
- figure 8 is a section of the part indicated by arrow VIII in figure 1, and
- figures 9 and 10 are the respective sections along the lines IX-IX and X_X in figure 8.

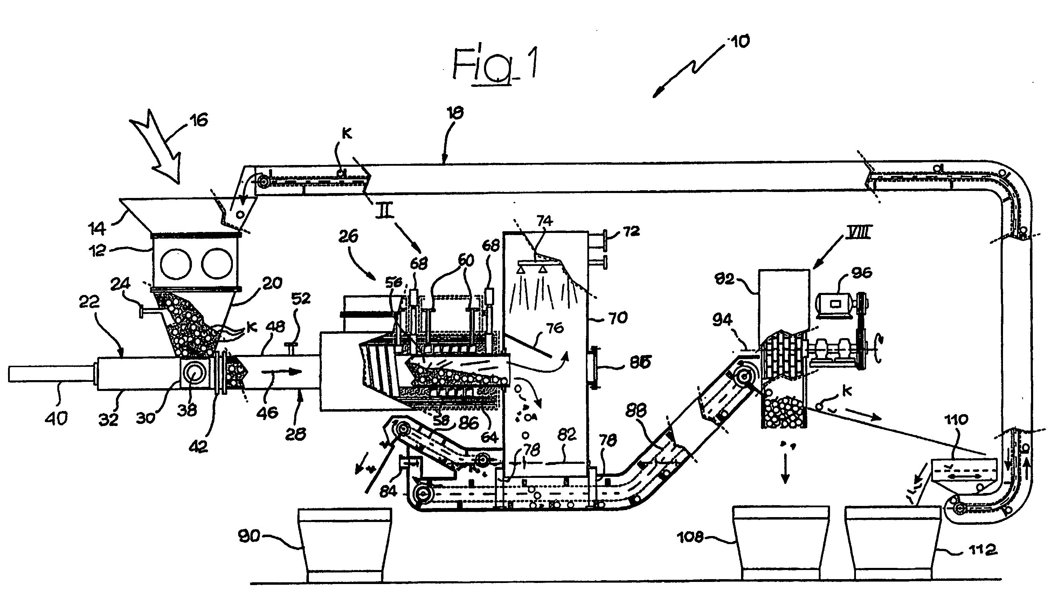

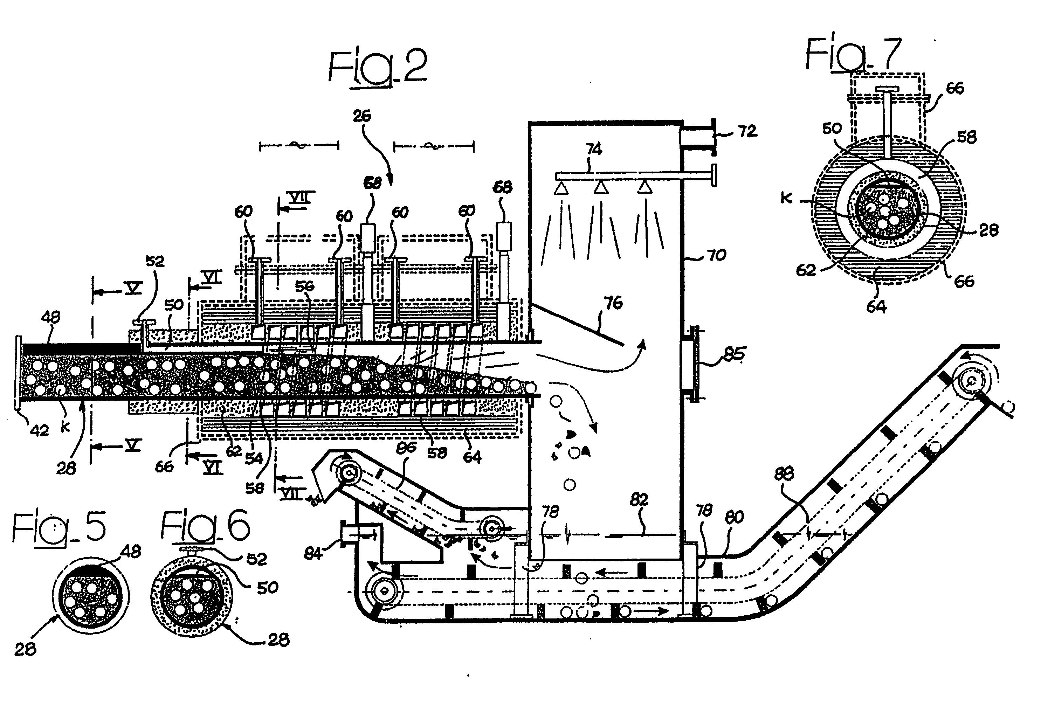

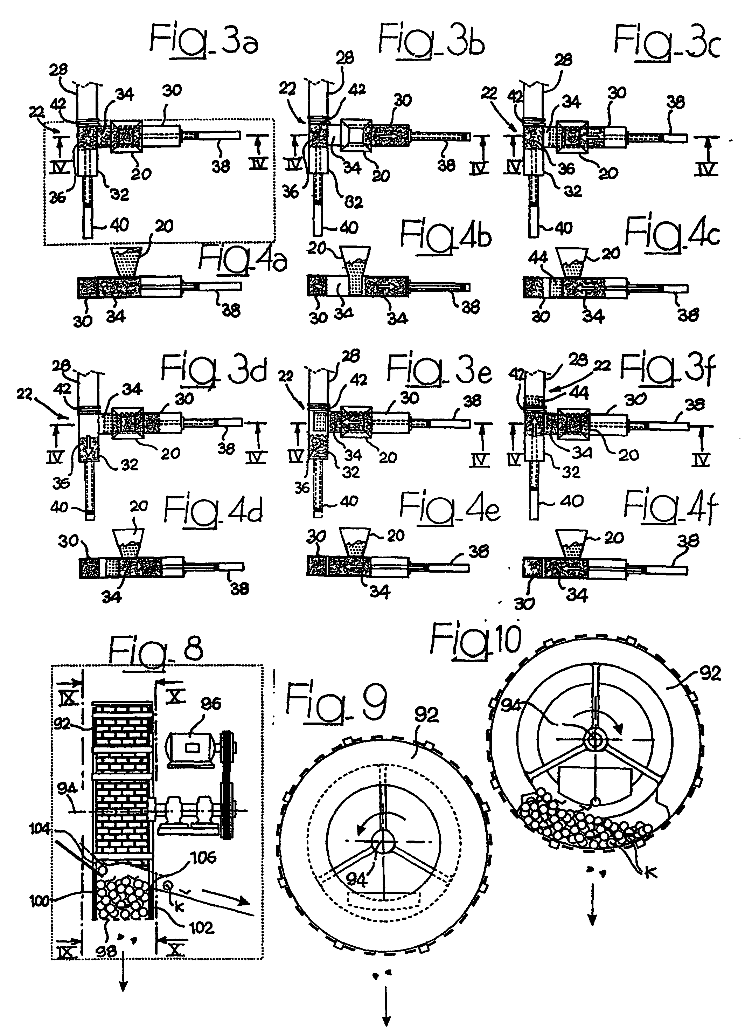

With initial reference to figure 1, item 10 indicates the equipment according to the present invention for the transformation of refuse and waste using induced currents.

The equipment (10) includes a grinding and mixing device (12), with a hopper (14) into which a load conveyor (not shown) feeds the materials to be processed from above and in the direction of the arrow (16). The equipment 10 includes a conveyor (18), which feeds the hopper (14) with a predetermined quantity of conductive bodies (k). The grinding and mixing device (12) grinds the refuse and waste and mixes the conductive bodies (k) with the mass of ground refuse. The size of the conductive bodies (k) is less than that of the fragments produces by the grinder (12) so that they can pass through the grinding device without interfering with the grinding members. For example, the refuse to be processed could be ground to an indicative fragment size of approximately 50 mm, while the conductive bodies (k) could be composed of metallic parts, such as steel alloy spheres for example, with a diameter of 40 mm. Preferably, the conductive bodies (k) should be hollow so as to have an apparent specific weight of substantially the same magnitude as that of the ground material. A hopper (20), linked with a feeder device (22), is arranged at the outlet of the grinding and mixing device (12). Preferably, the hopper (20) should be equipped with a nozzle (24), via which an inert scavenging fluid such as carbon dioxide could be introduced to eliminate air from the ground mass of refuse mixed with the conductive bodies (k). The feeder device (22) is constructed to feed the mixture of ground refuse and conductive bodies (k) to a transformation group (26), avoiding direct contact with the atmosphere. As will be more fully described in the following, the transformation group (26) includes a first reactor (28) composed of a tubular shell lined with refractory material and set up with its longitudinal axis more or less horizontal.

With reference to figures 3a-3f and 4a-4f, the feeder device (22) incorporates two feed cylinders (30 and 32), combined with their respective pistons (34 and 36), which are driven by linear actuators (38 and 40), composed of a hydraulic cylinder for example, or a mechanical actuating device. The two feed cylinders (30 and 32) are arranged with their longitudinal axes at angles to each other. In the example shown in the figures, the cylinders (30 and 32) are set at 90° to each other. The first feed cylinder (30) is connected to the hopper (20), while the second feed cylinder (32) is connected to the first reactor (28) via a joint (42) that permits thermal dilatation. Operation of the feeder device (22) is as follows. In figures 3a and 4a, both pistons (34 and 36) are at rest in the closed position. In the next phase, shown in figures 3b and 4b, piston 34 remains closed while piston 34 is brought to the fully-open position. A dose of the mixture (44) thus falls from the hopper (20) into the first feed cylinder (30) (figure 4b). In the next phase, shown in figures 3c and 4c, piston 34 is brought to the partially closed position whereby it blocks the descent of material from the hopper (20) and advances the dose of mixture (44) inside the first feed cylinder (30). Then, as shown in figures 3d and 4d, piston 34 remains stationary while piston 36 is opened completely. Subsequently, in the phase shown in figures 3e and 4e, piston 36 remains stationary in the open position while piston 34 closes completely, advancing the dose (44) even further, where it enters the zone of influence of the second feed cylinder (32). Finally, as shown in figures 3f and 4f, piston 36 is brought to its closed position, making the dose (44) pass into the first reactor (28). The above operational phases are cyclically repeated, producing a stepwise advancement of material inside the first reactor (28) in the direction indicated by arrow 46 in figure 1. The feed cylinders (30 and 32) can have cross sections of various shapes, but square or circular sections are preferable. It may be noted that to avoid air entering the first reactor (28), during all of the operating phases of the feeder device (22), the internal part of the reactor (28) is never in direct contact with the hopper (20).

With particular reference to figure 2, the first reactor (28) is composed of materials capable of supporting the expected temperatures of the specific process that it is intended to develop, without fusing or losing the necessary mechanical characteristics. The reactor (28) is made using graphite or special alloys capable of supporting high temperatures, such as alloys containing nickel, chrome, tungsten, molybdenum or niobium. The first reactor (28) can have different types of cross section, circular for example. As shown in figure 5, the first section of the reactor has a filled zone (48) in the upper part, which then becomes a hollow (50) in a successive zone (see figure 6). The hollow zone (50) terminates in correspondence with a point in the reactor (28) indicated as 54 in figure 2. Beyond this point, the internal cross section of the reactor (28) increases with respect to the previous section. Thanks to this configuration, a free zone (56) is created downstream of point 54 where the steam can be insufflated via a nozzle (52) and in which the reaction gases can develop.

The transformation group (26) includes an inductive heating system incorporating one or more coils (58) that encircle the reactor (28). The coils (58) consist of metallic tubular elements wound in a spiral, the ends of which (60) are connected to a highfrequency alternating current power source (not shown). A coolant liquid can be circulated through the tubular elements that form the coils (58) to remove the heat that forms in the coils (58) due to the passage of electric current. The frequency of the alternating current applied to the terminals of the coils (58) can vary from a few hundred to millions of Hertz. The inductive heating system includes an insulation layer (62) of refractory material with a high index of softening and a layer of lagging material (64), as well as a metal casing (66) for protection and shielding. One or more sensors (68) are positioned at the bottom of conduits, which pass through the layers 62 and 64 so that these can optically inspect certain zones of the reactor's (28) external walls that are not covered by the insulation. The sensors (68) detect infrared emissions from the wall of the reactor (28) and supply an indicative signal of the temperature inside the reactor. These signals are transmitted to a control unit (not shown) that is programmed to adjust the current or supply frequency of the coils (58) to ensure that the mixture of materials to be processed is maintained at a predetermined temperature. This temperature can be changed according to the type of transformation that is wished to carry out (gasification, depolymerization or fusion).

The coils (58) create a variable electromagnetic flux of very high frequency that links with the mixture of materials that advances inside the reactor (28). The alternating electromagnetic flux induces induced currents in the conductive bodies (k) and in any metallic elements contained in the mixture of materials to be processed. These induced currents cause rapid heating of the metallic bodies which then transfer the heat to the non metallic parts of the mixture to be processed. Heating of the mixture occurs in an endogenous manner and requires only a few seconds. The process temperature can be varied within a range from 300 to 1500°C by adjusting the voltage, frequency or intensity of the supplied current. The process temperature can be adapted in real-time to variations in composition of the materials to be processed. The equipment permits rapid process start-up and stoppage, as well as prompt regulation based on examination of the quality of the products obtained from the reaction.

Subjecting carbon-based substances to high temperature in an oxygen-free environment, in the known manner, invokes a series of endothermic reactions that provoke the scission of the molecules' chemical links, resulting in so-called pyrolysis or cracking, which produces substances with smaller molecular weights according to the temperatures applied and the manner of application.

In the known types of pyrolysis oven, the material is heated in rather a slow manner. This implicates the evaporation of water and then, in sequence, the formation of carbon dioxide and acidic substances at temperatures between 180 and 400°C, followed by the formation of gas and carbon at temperatures between 400 and 700°C. These effects generally give rise to a low yield of combustible gases.

Instead, the equipment described in the present invention allows a temperature in excess of 800°C to be rapidly applied in the presence of steam. In this way, a gasification process is achieved in which the water vapour attacks the organic carbon as indicated in the following reaction:

CₙHₘ + nH₂O = nCO + (n+m/2)H₂

producing oxides of carbon and hydrogen, both gases and combustibles.

This reaction can also be written as the result of two partial reactions, whereby the substances are transformed into carbon, which, since the temperature of the system is above 800°C, in turn reacts with water to form the carbon and hydrogen oxides:

CₙHₘ = nC + m/2H₂

NC + nH₂O = nCO + nH₂

The gasification to water gas reactions for cellulose and polyethylene are as follows:
Cellulose:

   (C₁₂H₂₀O₁₀) + 2H₂O = 12CO + 12H₂
Polyethylene:

   (C₂H₄) + H₂O = CH₄ + CO + H₂

As can be easily calculated, this type of transformation requires 11 grams of water vapour for every 100 grams of cellulose and 64 grams for every 100 grams of polyethylene. The absence of these essential quantities of steam, together with the low process temperature, are the causes of the formation of significant quantities of carbon and tar-like substances in the known types of pyrolytic ovens.

Always referring to figure 2, the transformation group (26) incorporates a second reactor (70) composed of a shell with its axis more or less vertical and without a floor plate. The outlet section of the first reactor (28) communicates with the internal volume of the second reactor (70). An outlet nozzle (72) is provided at the top of the second reactor (70) for extracting the products of the reaction in gaseous form. A spray device (74) produces a shower of water for washing the gaseous reaction products in countercurrent. A deflector (76) is arranged to prevent the water spray from interfering with the outlet section of the first reactor (28).

The second reactor (70) is equipped with feet (78) that rest on the bottom of a tank filled with water up to the level indicated by 82. The open bottom of the second reactor (70) is submerged beneath level 82, but is distanced from the bottom floor of the tank (80) by the feet (78). The tank (80) is equipped with an overspill nozzle (84), regulated to ensure that the liquid in the tank (80) is kept at level 82. The second reactor (70) can also be equipped with an inspection window (85).

The liquid in which the open lower end of the second reactor (70) is immersed forms a wet seal that prevents gaseous substances from escaping. In consequence, the gaseous substances can only leave the second reactor (70) via the outlet nozzle (72). The gas that leaves the outlet nozzle (72) is conveyed to collection tanks (not shown). The first reactor (28) and the second reactor (70) are maintained just above atmospheric pressure, regulating the backpressure of the gas collection tanks downstream of the outlet nozzle (72). The gas produced by the transformation group (26) can be used for feeding an electric power generator group, including an alternator combined with a gas or turbine engine, which produces the electrical energy necessary for running the equipment as well as an excess of approximately 0.6 kW for each kilo of refuse that is processed. The electrical power required for running the equipment depends on the dimensions, capacity and operating conditions of the equipment. To process one kilo of material, approximately 1 kW is needed in the case of polyethylene depolymerization, 0.8 kW for processing printed circuit board scrap containing resins and fibreglass, and 1 kW for the complete gasification of carbon-based substances, such as paper and polyethylene.

In the second reactor (70), the gaseous substances are rapidly cooled and washed by the water spray, discharging static electricity and also blocking the retrogradation of carbon oxide to carbon dioxide and carbon, which could take place if cooling was slow. The solid materials and conductive bodies (k) that are discharged from the first reactor (28) fall down due to gravity. The conductive bodies (k) and the solid products of the reaction cool rapidly in contact with the water and produce steam which comes into contact with the material leaving the first reactor (28), where it contributes to completing the gasification reaction and prevents the formation of carbon. Lighter solid materials, such as waxes and plasticizers, gather above the water level (82) while the conductive bodies (k) and heavy solid products collect on the bottom of the tank (80).

With reference to figures 1 and 2, the equipment (10) includes a first and a second collection system (86 and 88) for recovering solid products. The first collection system (86) comprises a conveyor equipped with a motor-driven chain and drainage scoops that skim the top of the liquid (82) and collect the lighter solid materials and discharge them into a collecting vessel (90).

The second collection system (88) also consists of a conveyor equipped with a motor-driven chain and collection scoops, but the scoops skim the bottom floor of the tank (80) and collect the heavy solid materials. As can be seen in figure 1, conveyor 88 feeds the conductive bodies (k) and heavy solid materials to a rotary separator (92), spinning around a horizontal axis (94) and driven by a motor (96). With reference to figures 8, 9 and 10, the separator device (92) has a cylindrical wall (98) forming a grill and two parallel ends (100 and 102) equipped with openings (104 and 106 respectively). The separator device (92) is kept in turning around its axis (94) and the conductive bodies (k), together with other heavy solid materials (metals and similar) enter via opening 104. The separator device (92) crushes vitreous slag which is then expelled by gravity through the grill (98) and collected in a container (108 in figure 1). The separation can also be carried out with the addition of a water spray. With reference to figure 1, the conductive bodies (k) and metals exit from opening 106 of the rotary separator (92) and are transported to a vibratory separator (110) where the conductive bodies (k) and solid products are separated, with the latter being collected in another container (112). The conductive bodies (k) are picked up at the outlet of the vibratory separator (110) by a chain conveyor (18) that transports them to the hopper (14), where they start a new cycle.

The process and equipment described in the present invention are particularly useful for the gasification of carbon-based products, such as paper, wood, rubber, polyethylene, polypropylene, plastic materials in general, resins, paints, oils, greases, biomass, and organic compounds with high molecular weights. Processing these products at a high temperature of approximately 800°C generates gaseous products with low molecular weight, mainly CO, H₂, CH₄, CO₂, etc., giving rise to a combustible gas. The process and equipment described in the present invention also find valid application for the elimination of printed circuit board scrap. This scrap contains resins, fibreglass, copper, tin, silicon, steel, silicates etc. and is destined to increase with time due to the progressive increase in the scrapping of obsolete computer systems. The disposal of such scrap in waste dumps necessitates the utilisation of special plants, which are also necessary for disposing of the waste produced if this scrap is incinerated. When processed by the equipment described in the present invention at a temperature of approximately 1100°C, this scrap produces combustible gases, recyclable metallic scrap composed of bronze and steel, as well as vitreous slag.

Applying the process and equipment described in the present invention to the processing of polyethylene scrap, and operating at a temperature of 500°C, precious, solid paraffin waxes with a melting point of around 70°C are obtained, while using a temperature of approximately 600°C produces low liquid polymers that can be used as plasticizers.

Another interesting application of the present invention consists in the processing of metallic packaging that has contained refuse of an organic nature and is contaminated with dregs and sludge. When this contaminated packaging is subjected to a temperature between 300 and 500°C, combustible gases and vapours are released together with clean metal scrap, ready for despatch to the steelworks.

## Claims

1. A process for the transformation of organic products, in particular for the transformation of refuse, waste and similar, whereby the products to be processed are heated to a predetermined temperature, without contact with air, wherein the products to be processed have been previously mixed with conductive bodies (k) and the heating of the products is effected in a reactor (28) by subjecting the mixture of products and conductive bodies (k) to a variable electromagnetic induction flux of very high frequency, **characterized in that** water vapour is insufflated into the mixture of the products to be processed and conductive bodies (k) in a free zone (56) of said reactor (28) in which reaction gases develop at a temperature above 800°C.

2. A process according to Claim 1, **characterized in that** the heating is effected with the mixture of products and conductive bodies (k) subjected to the aforementioned electromagnetic induction flux passing continually through the first reactor (28).

3. A process according to Claim 2, **characterized in that** after the non-stop passage through the said reactor (28), the aforementioned conductive bodies (k) and the resulting products of the reaction are subjected to a phase of rapid cooling with water.

4. A process according to Claim 1, **characterized in that** the aforementioned conductive bodies (k) are composed of metal spheres.

5. A process according to Claim 1, **characterized in that** the aforementioned conductive bodies (k) have an apparent specific weight substantially similar to the apparent specific weight of the products to be processed.

6. A process according to Claim 1, in which carbon-based products to be processed are converted into combustible gases.

7. A process according to Claim 1, in which products of a polymeric nature to be processed are depolymerized with the formation of substances with lower molecular weight.

8. A process according to Claim 1, in which fibres of silicates such as glass, asbestos and similar present in the materials to be processed are fused and transformed into non-hazardous vitreous slag.

9. A process according to Claim 1, in which metallic parts present in the materials to be processed are depurated of their contaminants.

10. A process according to Claim 1, in which the temperature induced in the material to be processed is controlled by modifying the characteristics of the electromagnetic flux in which the products to be processed are immersed.

11. Equipment for the transformation of organic products, in particular for the transformation of refuse, waste and similar, which includes:
a reactor (28) inside which the products are moved along without contact with the atmosphere,
means of heating for bringing the said products to a chosen temperature, and wherein
the plant includes a mixing device (12) positioned before the said reactor (28) suitable for mixing the products to be processed with the conductive bodies (k) and the said means of heating include an induction device (58) capable of generating a variable electromagnetic induction flux of very high frequency inside the said reactor (28), **characterized in that** the plant includes means (50 and 52) for introducing.a jet of water vapour inside the said reactor (28) in a free zone (56) and control means for adjusting the current or supply frequency of the coils (58) to ensure that the temperature in the free zone (56) is above 800°C.

12. Equipment according to Claim 11, **characterized in that** it includes a grinding device (12) for grinding the products to be processed and inside which the mixing of the said conductive bodies (k) and the products to be processed occurs.

13. Equipment according to Claim 11, **characterized in that** it includes a feeder device (22), for feeding the said reactor (28) with a continuous flow of products to be processed mixed with conductive bodies (k); the feeder device (22) incorporates a pair of feed cylinders (30 and 32), at angles to each other and combined with their respective pistons (34 and 36), actioned according to a specific cycle to avoid contact with the atmosphere inside the reactor (28).

14. Equipment according to Claim 11, **characterized in that** the aforementioned induction heating device includes at least one coil (58) positioned coaxially and external to the said reactor (28).

15. Equipment according to Claim 14, **characterized in that** the aforementioned coil is formed by at least one tubular conductor in which a coolant fluid circulates.

16. Equipment according to Claim 11, **characterized in that** it includes sensors (68) for determining the temperature inside the reactor (28) by detecting the thermal radiation emitted by a portion of the wall of the reactor (28).

17. Equipment according to Claim 16, **characterized in that** it incorporates a control unit for modifying the characteristics of the electromagnetic induction flux in function of the signals arriving from the said sensors (68).

18. Equipment according to Claim 11, **characterized in that** it includes a second reactor (70) positioned to receive the products of reaction and the conductive bodies (k) when processing inside the first reactor (28) is completed and that the second reactor (70) is equipped with means (74 and 82) for the rapid cooling of the products of reaction and the conductive bodies (k).

19. Equipment according to Claim 18, **characterized in that** the second reactor (70) is includes a spray device (74) for producing a water spray in countercurrent with respect to the flow of gaseous products.

20. Equipment according to Claim 17, **characterized in that** the second reactor (70) has an open bottom immersed in a water bath in which the solid products and conductive bodies (k) leaving the first reactor (28) are collected.

21. Equipment according to Claim 20, **characterized in that** it includes a first and a second collector device (86 and 88) arranged to respectively collect light solid products that float on top of the aforesaid water bath and heavy solid products that are deposited on the bottom of the tank (80) containing the aforesaid water bath.

22. Equipment according to Claim 21, **characterized in that** it includes means (92 and 110) for separating the aforesaid conductive bodies (k) from the solid products that are deposited together with the said conductive bodies (k) on the bottom of the said tank (80).

## Patentansprüche

1. Verfahren zur Umwandlung organischer Produkte, insbesondere zur Umwandlung von Abfall, Müll und dergleichen, wobei die zu verarbeitenden Produkte auf eine bestimmte Temperatur unter Ausschluss von Luft erhitzt werden, wobei die zu verarbeitenden Produkte vorab mit leitfähigen Körpern (k) vermischt wurden, und wobei das Erhitzen der Produkte in einem Reaktor (28) bewirkt wird, indem das Gemisch von Produkten und leitfähigen Körpern (k) einem variablen elektromagnetischen Induktionsfluss mit sehr hoher Frequenz ausgesetzt wird, **dadurch gekennzeichnet, dass** in das Gemisch von zu verarbeitenden Produkten und leitfähigen Körpern (k) Wasserdampf in einen freien Bereich (56) des Reaktors (28), in dem sich Reaktionsgase bei einer Temperatur oberhalb 800°C entwickeln, eingeblasen wird.

2. Verfahren nach Anspruch 1, **dadurch gekennzeichnet, dass** das Erhitzen dadurch bewirkt wird, dass das Gemisch von Produkten und leitfähigen Körpern (k) dem vorstehend aufgeführten elektromagnetischen Induktionsfluss unterworfen wird, während es durch den ersten Reaktor (28) kontinuierlich geleitet wird.

3. Verfahren nach Anspruch 2, **dadurch gekennzeichnet, dass** die vorstehend aufgeführten leitfähigen Körper (k) und die so erhaltenen Reaktionsprodukte nach dem kontinuierlichen Durchgang durch den Reaktor (28) einer Phase schnellen Abkühlens mit Wasser unterworfen werden.

4. Verfahren nach Anspruch 1, **dadurch gekennzeichnet, dass** die vorstehend aufgeführten leitfähigen Körper (k) aus Metallkügelchen bestehen.

5. Verfahren nach Anspruch 1, **dadurch gekennzeichnet, dass** die vorstehend aufgeführten leitfähigen Körper (k) eine relative Aufschüttdichte aufweisen, die im Wesentlichen vergleichbar ist zu der relativen Aufschüttdichte der zu verarbeitenden Produkte.

6. Verfahren nach Anspruch 1, wobei zu verarbeitende, auf Kohlenstoff basierende Produkte in verbrennbare Gase umgewandelt werden.

7. Verfahren nach Anspruch 1, wobei zu verarbeitende, polymere Produkte abgebaut werden, wobei Substanzen mit geringerem Molekulargewicht gebildet werden.

8. Verfahren nach Anspruch 1, wobei in den zu verarbeitenden Materialien vorhandene Fasern von Silikaten, wie Glas, Asbest und dergleichen, verschmolzen und in eine nicht schädliche, gläserne Schlacke umgewandelt werden.

9. Verfahren nach Anspruch 1, wobei in den zu verarbeitenden Materialien vorhandene metallische Teile von deren Verunreinigungen gereinigt werden.

10. Verfahren nach Anspruch 1, wobei die in dem zu verarbeitenden Material induzierte Temperatur durch Ändern der Eigenschaften des elektromagnetischen Flusses, in den die zu verarbeitenden Produkte getaucht werden, gesteuert wird.

11. Ausrüstung zur Umwandlung organischer Produkte, insbesondere zur Umwandlung von Abfall, Müll und dergleichen, welche aufweist:
einen Reaktor (28), in dem die Produkte unter Ausschluss von Atmosphäre entlang geführt werden,
Mittel zum Erhitzen, um die Produkte auf eine gewählte Temperatur zu bringen, und worin
die Anlage eine vor dem Reaktor (28) angeordnete Mischeinrichtung (12) aufweist, die zum Vermischen der zu verarbeitenden Produkte mit den leitfähigen Körpern (k) geeignet ist, und wobei die Heizmittel eine Induktionseinrichtung (58) aufweisen, die in dem Reaktor (28) einen variablen elektromagnetischen Induktionsfluss mit sehr hoher Frequenz erzeugen kann, **dadurch gekennzeichnet, dass** die Anlagemittel (50 und 52) zum Einbringen eines Wasserdampfstrahls in den Reaktor (28) in einen freien Bereich (56) umfasst, und Steuermittel zum Einstellen des Stroms oder der gelieferten Frequenz der Spulen (58), um sicher zu stellen, dass die Temperatur in dem freien Bereich (56) über 800°C liegt.

12. Ausrüstung nach Anspruch 11, **dadurch gekennzeichnet, dass** sie eine Zerkleinerungseinrichtung (12) zum Zerkleinern der zu verarbeitenden Produkte aufweist, worin der Vermischungsvorgang der leitfähigen Körpern (k) und der zu verarbeitenden Produkte abläuft.

13. Ausrüstung nach Anspruch 11, **dadurch gekennzeichnet, dass** sie eine Beschickungseinrichtung (22) zum Beschicken des Reaktors (28) mit einem kontinuierlichen Strom von zu verarbeitenden Produkten, die mit leitfähigen Körpern (k) vermischt sind, aufweist, wobei die Beschickungseinrichtung (22) ein Paar Beschickungszylinder (30 und 32) enthält, die winklig zueinander angeordnet sind und mit deren jeweiligen Kolben (34 und 36) kombiniert sind, und gemäß einem spezifischen Zyklus betätigt werden, um zu verhindern, dass das Innere des Reaktors (28) mit der Atmosphäre in Kontakt tritt.

14. Ausrüstung nach Anspruch 11, **dadurch gekennzeichnet, dass** die vorstehend aufgeführte Induktionsheizeinrichtung mindestens eine Spule (58) aufweist, die in Bezug auf den Reaktor (28) koaxial und extern angeordnet ist.

15. Ausrüstung nach Anspruch 14, **dadurch gekennzeichnet, dass** die vorstehend aufgeführte Spule durch mindestens eine röhrenförmige Leitung ausgebildet ist, in der ein Kühlmittel-Fluid zirkuliert.

16. Ausrüstung nach Anspruch 11, **dadurch gekennzeichnet, dass** Sensoren (68) zur Bestimmung der Temperatur in dem Reaktor (28) durch Erfassen der durch einen Teil der Wand des Reaktors (28) emittierten thermischen Strahlung vorgesehen sind.

17. Ausrüstung nach Anspruch 16, **dadurch gekennzeichnet, dass** eine Steuereinheit zur Änderung der Eigenschaften des elektromagnetischen Induktionsflusses in Funktion der von den Sensoren (68) ankommenden Signale vorgesehen ist.

18. Ausrüstung nach Anspruch 11, **dadurch gekennzeichnet, dass** sie einen zweiten Reaktor (70) aufweist, der derart angeordnet ist, dass er die Reaktionsprodukte und die leitfähigen Körper (k) erhält, wenn die Verarbeitung in dem ersten Reaktor (28) abgeschlossen ist, und dass der zweite Reaktor (70) mit Mitteln (74 und 82) zum schnellen Abkühlen der Reaktionsprodukte und der leitfähigen Körpern (k) ausgestattet ist.

19. Ausrüstung nach Anspruch 18, **dadurch gekennzeichnet, dass** der zweite Reaktor (70) eine Sprüheinrichtung (74) zur Bildung eines Wasserregens, die gegenläufig zu dem Strom der gasförmigen Produkte ist, aufweist.

20. Ausrüstung nach Anspruch 17, **dadurch gekennzeichnet, dass** der zweite Reaktor (70) einen offenen Boden aufweist, der in ein Wasserbad eingetaucht ist, in dem die festen Produkte und leitfähigen Körper (k), die den ersten Reaktor (28) verlassen, gewonnen werden.

21. Ausrüstung nach Anspruch 20, **dadurch gekennzeichnet, dass** sie eine erste und zweite Sammeleinrichtung (86 und 88) aufweist, die angeordnet ist, um jeweils leichte feste Produkte, die auf dem vorstehend aufgeführten Wasserbad schwimmen, zu gewinnen, und schwere feste Produkte, die auf den Boden des Behälters (80), der das vorstehend aufgeführte Wasserbad enthält, abgesunken sind.

22. Ausrüstung nach Anspruch 21, **dadurch gekennzeichnet, dass** sie Mittel (92 und 110) zum Abtrennen der vorstehend aufgeführten leitfähigen Körper (k) von den festen Produkten, die zusammen mit den leitfähigen Körpern (k) auf dem Boden des Behälters (80) abgesunken sind, aufweist.

## Revendications

1. Procédé pour la transformation de produits organiques, en particulier, pour la transformation de rebuts, déchets et similaires, par lequel les produits à traiter sont chauffés à une température prédéterminée, sans contact avec l'air, dans lequel les produits à traiter ont été précédemment mélangés à des corps conducteurs (k) et le chauffage des produits est réalisé dans un réacteur (28) en soumettant le mélange de produits et de corps conducteurs (k) à un flux d'induction électromagnétique variable de très haute fréquence, **caractérisé en ce que** la vapeur d'eau est insufflée dans le mélange des produits à traiter et de corps conducteurs (k) dans une zone libre (56) dudit réacteur (28), dans laquelle les gaz de réaction se développent à une température supérieure à 800°C.

2. Procédé selon la revendication 1, **caractérisé en ce que** le chauffage est réalisé en soumettant le mélange de produits et de corps conducteurs (k) au flux d'induction électromagnétique mentionné ci-dessus, en le passant continuellement à travers le premier réacteur (28).

3. Procédé selon la revendication 2, **caractérisé en ce qu'**après le passage continu à travers ledit réacteur (28), les corps conducteurs mentionnés ci-dessus (k) et les produits de la réaction obtenus sont soumis à une phase de refroidissement rapide à l'eau.

4. Procédé selon la revendication 1, **caractérisé en ce que** les corps conducteurs (k) mentionnés ci-dessus sont composés de sphères métalliques.

5. Procédé selon la revendication 1, **caractérisé en ce que** les corps conducteurs (k) mentionnés ci-dessus ont un poids spécifique apparent substantiellement similaire au poids spécifique apparent des produits à traiter.

6. Procédé selon la revendication 1, dans lequel les produits à base de carbone à traiter sont convertis en gaz combustibles.

7. Procédé selon la revendication 1, dans lequel les produits de nature polymère à traiter sont dépolymérisés avec la formation de substances ayant une faible masse moléculaire.

8. Procédé selon la revendication 1, dans lequel les fibres de silicates comme le verre, l'amiante et similaire, présentes dans les matériaux à traiter, sont fondues et transformées en une scorie vitreuse non dangereuse.

9. Procédé selon la revendication 1, dans lequel les pièces métalliques présentes dans les matériaux à traiter sont épurées de leurs contaminants.

10. Procédé selon la revendication 1, dans lequel la température induite dans le matériau à traiter est contrôlée en modifiant les caractéristiques du flux électromagnétique dans lequel les produits à traiter sont immergés.

11. Equipement pour la transformation de produits organiques, en particulier pour la transformation de rebuts, déchets et similaires, comprenant :
un réacteur (28) à l'intérieur duquel les produits sont déplacés sans contact avec l'atmosphère,
des dispositifs de chauffage pour amener lesdits produits à une température choisie, et dans lesquels
l'installation comprend un dispositif de mélange (12) situé avant ledit réacteur (28), adapté pour mélanger les produits à traiter avec les corps conducteurs (k) et lesdits dispositifs de chauffage comprenant un dispositif d'induction (58) capable de générer un flux d'induction électromagnétique variable, de très haute fréquence, à l'intérieur dudit réacteur (28), **caractérisé en ce que** l'installation comprend des dispositifs (50 et 52) pour introduire un jet de vapeur d'eau à l'intérieur dudit réacteur (28) dans une zone libre (56) et des moyens de contrôle pour régler le courant ou la fréquence d'alimentation des bobines (58), afin de garantir que la température dans la zone libre (56) sera supérieure à 800°C.

12. Equipement selon la revendication 11, **caractérisé en ce qu'**il comprend un dispositif de broyage (12) pour broyer les produits à traiter et à l'intérieur duquel a lieu le mélange desdits corps conducteurs (k) et des produits à traiter.

13. Equipement, selon la revendication 11, **caractérisé en ce qu'**il comprend un dispositif d'alimentation (22), pour alimenter ledit réacteur (28) avec un flux continu de produits à traiter, mélangés à des corps conducteurs (k) ; le dispositif d'alimentation (22) comprend une paire de cylindres d'alimentation (30 et 32), formant un angle l'un avec l'autre et combinés avec leurs pistons respectifs (34 et 36), actionnés selon un cycle spécifique pour éviter le contact avec l'atmosphère à l'intérieur du réacteur (28).

14. Equipement selon la revendication 11, **caractérisé en ce que** le dispositif de chauffage à induction mentionné ci-dessus comprend au moins une bobine (58) positionnée de façon coaxiale et externe audit réacteur (28).

15. Equipement selon la revendication 14, **caractérisé en ce que** la bobine mentionnée ci-dessus est formée d'au moins un conducteur tubulaire dans lequel circule un fluide réfrigérant.

16. Equipement selon la revendication 11, **caractérisé en ce qu'**il comprend des capteurs (68) pour déterminer la température à l'intérieur du réacteur (28), en détectant la radiation thermique émise par une portion de la paroi du réacteur (28).

17. Equipement selon la revendication 16, **caractérisé en ce qu'**il comprend une unité de commande permettant de modifier les caractéristiques du flux d'induction électromagnétique en fonction des signaux arrivant desdits capteurs (68).

18. Equipement selon la revendication 11, **caractérisé en ce qu'**il comprend un second réacteur (70), positionné de manière à recevoir les produits de réaction et les corps conducteurs (k) quand le traitement à l'intérieur du premier réacteur (28) est achevé et que le second réacteur (70) est équipé de dispositifs (74 et 82) pour le refroidissement rapide des produits de réaction et des corps conducteurs (k).

19. Equipement selon la revendication 18, **caractérisé en ce que** le second réacteur (70) comprend un dispositif de vaporisation (74) pour produire une pulvérisation d'eau à contre-courant par rapport au flux des produits gazeux.

20. Equipement selon la revendication 17, **caractérisé en ce que** le second réacteur (70) a un fond ouvert immergé dans un bain d'eau dans lequel les produits solides et les corps conducteurs (k), qui quittent le premier réacteur (28), sont collectés.

21. Equipement selon la revendication 20, **caractérisé en ce qu'**il comprend un premier et un second dispositif collecteur (86 et 88), disposés de façon à collecter respectivement les produits solides légers qui flottent en haut dudit bain d'eau et les produits solides lourds qui sont déposés au fond du réservoir (80) contenant ledit bain d'eau.

22. Equipement selon la revendication 21, **caractérisé en ce qu'**il comprend des dispositifs (92 et 110) permettant de séparer lesdits corps conducteurs (k) des produits solides qui sont déposés avec lesdits corps conducteurs (k) sur le fond dudit réservoir (80).
